# EUROPÄISCHE PATENTSCHRIFT

(11) **EP 3 698 617 B1**
(45) Veröffentlichungstag und Bekanntmachung des Hinweises auf die Patenterteilung: **25.10.2023**
(21) Anmeldenummer: 20157675.8
(22) Anmeldetag: 17.02.2020
(51) Int. Cl.: A01C 7/20

(54) **SCHARSYSTEM FÜR EINE LANDWIRTSCHAFTLICHE MASCHINE**
COULTER SYSTEM FOR AN AGRICULTURAL MACHINE
SYSTÈME DE SOC DE SEMIS POUR UNE MACHINE AGRICOLE

(30) Priorität: 19.02.2019 DE 202019100923 U; 19.02.2019 DE 202019100926 U
(43) Veröffentlichungstag der Anmeldung: 26.08.2020
(73) Patentinhaber: PÖTTINGER Landtechnik GmbH, 4710 Grieskirchen (AT)
(72) Erfinder: Preimeß, Hans-Jörg, 4710 Grieskirchen (AT); Gründling, Franz, 4710 Grieskirchen (AT); Stadlbauer, Franz, 4710 Grieskirchen (AT); Loher, Felix, 4710 Grieskirchen (AT)
(74) Vertreter: Thoma, Michael

(56) Entgegenhaltungen:
- EP-A1- 1 391 147
- EP-A1- 2 807 910
- EP-A1- 2 944 170
- EP-A1- 2 989 874
- DE-A1-102009 058 342
- US-A1- 2017 000 005

## Beschreibung

Die vorliegende Erfindung betrifft ein Scharsystem für eine landwirtschaftliche Maschine gemäß dem Oberbegriff des Anspruchs 1, sowie eine solche landwirtschaftliche Maschine, insbesondere eine Sämaschine, mit einem solchen Scharsystem.

Eine Sämaschine mit einem solchen Scharsystem ist beispielsweise aus der Schrift EP 2 944 170 A1 bekannt, bei der zur gemeinsamen Höhenverstellung der Säschare eine Linearführungseinheit vorgesehen ist, die eine linear verstellbare Verbindung zwischen dem Maschinenrahmen und der Schartrageinrichtung herstellt. Weitere landwirtschaftliche Maschinen mit höhenverstellbaren Scharsystemen sind aus den Schriften US 2017/0000005 A1, EP 2 989 874 A1, EP 1 391 147 A1, DE 10 2009 058 342 A1 und EP 2 807 910 A1 bekannt.

Um Saatgut zielgerichtet in einen Boden einzubringen sind Sämaschinen mit Säscharen, bspw. in Form von Scheibenscharen oder Zinkenscharen vorgesehen, um damit in einem Ackerboden eine Furche zu bilden, in die dann ein Saatgut eingelegt werden kann. Eine Sämaschine schleppt dabei typischerweise ein Scharsystem über einen zu besäenden Ackerboden, mit dem gleichzeitig mehrere parallel zur Fahrtrichtung liegende Furchen gebildet werden können, in die das Saatgut eingebracht wird. Zum Bilden einer solchen Furche im Ackerboden sind mehrere Säscharen vorgesehen. Dabei ist in der Regel jedes Säschar an einem Träger angeordnet, der von einer quer zur Fahrtrichtung angeordneten Querachse eines Scharrahmens abgeht. Zudem weist ein solcher Säscharträger ein Stützrad oder eine Druckrolle auf, die zu dem Säschar in Fahrtrichtung nachgeordnet angeordnet ist. Diese Druckrolle hat dabei die Aufgabe, die durch das Säschar gebildete Furche (auch: Sährille), in die das Saatgut gezielt eingelegt worden ist, zu schließen und mittels der Druckrolle überfahrenen Boden zu verdichten. Darüber hinaus dient die Druckrolle auch zum Abstützen des Säscharträgers gegenüber dem Boden, so dass die Arbeitstiefe der Säschar auch durch die Druckrolle einstellbar ist.

Durch das Verschließen und das Verdichten der mit dem Saatgut versehenen Furche wird ein guter Kontakt zwischen Saat und Ackerboden sichergestellt, was die Keimwahrscheinlichkeit der ausgebrachten Saat erhöht.

Das Säschar und die Druckrolle sind so an dem von dem Scharrahmen abgehenden Säscharträger angeordnet, dass das Säschar in einem Arbeitsbetrieb in den Ackerboden mit einer gewünschten Tiefe eindringt, wobei die nachgeordnete Druckrolle die durch das Säschar gebildete Furche überfährt und teilweise oder vollständig schließt.

Dabei ist der Säscharträger typischerweise derart federnd an dem Scharrahmen angeordnet, dass die auf den Boden wirkende Kraft von Säschar und Druckrolle für ein zufriedenstellendes Sähergebnis ausreicht, jedoch bei einem Auftreffen des Säschars auf einen Stein oder dergleichen auch ein Nachgeben erlaubt, um eine Beschädigung des Säschars zu verhindern.

Eine typische Vorrichtung aus dem Stand der Technik ergibt sich dabei bspw. aus der EP 1 391 147 A1, die ein spezifisch ausgebildeten Scharrahmen offenbart, der im Vorfeld der Aussaat höhenmäßig gegenüber seinem Tragrahmen fixiert wird, um eine festgelegte Eindringtiefe der Säscharen zu erreichen.

Problematisch an den Scharsystemen aus dem Stand der Technik ist, dass diese ein erhebliches Gewicht und sehr große Abmessungen aufweisen, was mitunter zu einem ungewünschten Verdichten des zu besäenden Bodens beim Überfahren führt.

Problematisch ist ferner auch, dass ein Ackerboden nicht durchgängig vergleichbare Bodeneigenschaften aufweist, sondern sich dessen Beschaffenheit durchaus auch in einem kleinen Gebiet mehrmals ändern kann. Gründe hierfür können bspw. verschiedene Vorfrüchte, eine unterschiedliche vorhergehende Bodenbearbeitung oder einfach ein Wechsel der Bodenart sein. Hierbei kann es dann vorkommen, dass die Kraft zum Eindringen in den Ackerboden, welche zum Ablegen des Saatgut bei einer vorbestimmten Eindringtiefe erforderlich ist, variiert, so dass es dabei zu einem zu tiefen Ablegen oder einem Ablegen zu nahe an der Ackerbodenoberfläche kommen kann. Ferner wird auch die Druckrolle mit einem nicht passenden Druck dem Säschar nachgeführt, so dass auch dies aufgrund zu starker oder zu geringer Bodenverdichtung nachteilhafte Auswirkungen für die eingebrachte Saat hat.

Es ist demnach das Ziel der vorliegenden Erfindung ein verbessertes Scharsystem für eine landwirtschaftliche Maschine zu schaffen, das die oben aufgeführten Nachteile abmildert oder überwindet.

Dies gelingt mit dem Scharsystem, welches die Merkmale des Anspruchs 1 aufweist, sowie mit einer landwirtschaftlichen Maschine, die gemäß Anspruch 16 ein solches Scharsystem aufweist. Vorteilhafte Ausgestaltungen der Erfindung sind dabei in den abhängigen Ansprüchen wiedergegeben.

Das Scharsystem für eine landwirtschaftliche Maschine umfasst also einen Tragrahmen zum Ankoppeln an die landwirtschaftliche Maschine, einen Scharrahmen, der mit dem Tragrahmen verbunden ist und dessen Längsrichtung sich quer zu einer Arbeitsrichtung der Vorrichtung erstreckt, mindestens einen länglichen Säscharträger, der in Arbeitsrichtung von dem Scharrahmen abgeht und ein Säschar sowie eine der Säschar nachgeordnete Druckrolle aufweist, wobei der Scharrahmen höhenverstellbar gegenüber dem Tragrahmen ist, um eine Eindringtiefe des Säschars in einen landwirtschaftlich zu bearbeitenden Boden einstellen zu können. Dabei ist erfindungsgemäß eine Abstandsbestimmungseinheit zum Erfassen eines Bodenabstands des Scharrahmens vorgesehen, wobei eine Steuereinheit dazu ausgelegt ist, den Scharrahmen beim Überfahren eines Bodens in Abhängigkeit eines Signals der Abstandsbestimmungseinheit in seiner Höhe zu verstellen.

Dadurch wird gewährleistet, dass der Scharrahmen beim Überfahren eines Ackerbodens, der sich in seiner Bodenbeschaffenheit ändert, im Wesentlichen konstant über dem Ackerboden geführt wird, was zu einer gewünschten gleichmäßigen Eindringtiefe des Säschars führt. Anders als im Stand der Technik wird die Höhenverstellung des Scharrahmens dabei kontinuierlich in Abhängigkeit des von der Abstandsbestimmungseinheit gemessenen Bodenabstands vorgenommen. Dadurch entfallen eine Vielzahl von Elementen, die im Stand der Technik vorgesehen sind, um auf Bodenvariationen und die hieraus resultierende zu tiefe oder zu geringer Eindringtiefe des Säschars zu reagieren. So ist eine Parallelogrammführung des Säschars und der Druckrolle, wie sie im Stand der Technik sehr häufig vorkommt, entbehrlich, so dass eine sehr viel einfachere und leichtere Konstruktion verwendet werden kann.

Dabei kann vorgesehen sein, dass die Steuereinheit dazu ausgelegt ist, in Abhängigkeit eines Signals der Abstandsbestimmungseinheit den Scharrahmen in seiner Höhe so zu verstellen, dass beim Überfahren eines Bodens der Säscharträger auf Höhe des Säschars einen konstanten Bodenabstand beibehält und/oder dass der Scharrahmen beim Überfahren eines Bodens einen konstanten Bodenabstand beibehält.

Nach einer Fortbildung der Erfindung kann ebenfalls vorgesehen sein, dass der Säscharträger ein rohr- und/oder stangenförmiges Gebilde ist, das ausgehend vom Scharrahmen zumindest bis zum Anbindungspunkt des Säschars starr oder unflexibel ist. Die Verbindung mit dem Scharrahmen bzw. einer Querachse des Scharrahmens kann dabei eine gewisse Flexibilität aufweisen, bspw. mit Hilfe von Gummigelenken, wie es bei der Anbindung eines Säscharträgers aus dem Stand der Technik bekannt ist.

Ferner kann dabei vorgesehen sein, dass das an einem Säscharträger angeordnete Säschar starr an dem Säscharträger befestigt ist, so dass es gegenüber dem Säscharträger keinen Feder- oder Dämpfungsmechanismus gibt.

Sind mehrere in Fahrtrichtung hintereinander angeordnete Säscharreihen vorhanden, kann die Steuereinheit dazu ausgelegt sein, dass beim Überfahren eines Bodens ein vorderer Säscharträger oder ein hinterer Säscharträger auf Höhe des jeweiligen Säschars einen konstanten Bodenabstand beibehält. Zudem kann aber auch vorgesehen sein, dass ein in Fahrtrichtung zwischen den beiden Säscharen liegender Punkt auf konstantem Bodenabstand gehalten wird.

Nach der Erfindung ist vorgesehen, dass der Scharrahmen und der Tragrahmen über mindestens eine in ihrer Länge veränderbare Zylinderanordnung miteinander verbunden sind, und die Steuereinheit dazu ausgelegt ist, in Abhängigkeit des erfassten Bodenabstands die Länge der mindestens einen Zylinderanordnung zu variieren, wobei vorzugsweise genau zwei Zylinderanordnungen vorgesehen sind, welche die Höhenverstellung des Scharrahmens zu dem Tragrahmen vornehmen. Dabei kann vorgesehen sein, dass die Zylinderanordnung mit einem ihrer Enden direkt an dem Tragrahmen oder einem damit starr in Verbindung stehenden Element und mit ihrem anderen Ende direkt an dem Scharrahmen oder einem damit starr in Verbindung stehenden Element angelenkt ist.

Ferner kann die Steuereinheit dazu ausgelegt sein, die Fortbewegungsgeschwindigkeit der Vorrichtung zu bestimmen oder zu erhalten und die Höhenverstellung auch in Abhängigkeit dieses Parameters auszuführen.

Zudem kann vorgesehen sein, dass die Abstandsbestimmungseinheit an der Vorrichtung so angeordnet ist, dass sie in Arbeitsrichtung gesehen dem Säschar vorgelagert ist und vorzugsweise an dem Scharrahmen befestigt ist. Durch diese Anordnung kann sichergestellt werden, dass für die Auswertung und die hierauf basierende Höhenverstellung noch ausreichend Zeit ist, bevor ein sich eventuell in seiner Höhe variierender Boden auf das Säschar trifft.

Erfindungsgemäß ist vorgesehen, dass der Scharrahmen ferner über einen festen Anlenkpunkt mit dem Tragrahmen verbunden ist, so dass eine Höhenverstellung des Scharrahmens zu dem Tragrahmen zu einer Kreisbewegung führt, deren Mittelpunkt der feste Anlenkpunkt ist.

Der feste Anlenkpunkt wird vorzugsweise dazu genutzt, die Schleppkräfte vom Tragrahmen auf den Scharrahmen zu übertragen, so dass diese nicht zwangsläufig über die in ihrer Höhe verstellbare Verbindung übertragen werden müssen. Der feste Anlenkpunkt kann dabei als Scharnierverbindung ausgeführt sein, deren Scharnierachse bodenparallel und senkrecht zur Arbeitsrichtung der Vorrichtung ausgerichtet ist, so dass eine Schwenkbewegung des Scharrahmens um diesen Anlenkpunkt zu einer höhenmäßigen Verstellung gegenüber dem Bodenniveau führt.

Der Scharrahmen kann vorteilhafterweise so ausgestaltet sein, dass er über mindestens eine Querachse verfügt, die bodenparallel und senkrecht zur Arbeitsrichtung der Vorrichtung angeordnet ist. An dieser mindestens einen Querachse gehen die Säscharträger nach hinten ab, an denen das Säschar und die Druckrolle befestigt sind. Weiter kann vorgesehen sein, dass der Scharrahmen ferner mindestens ein sich in Arbeitsrichtung erstreckendes Schwingenelement aufweist, das starr mit der mindestens einen Querachse verbunden ist und an einem in Richtung des Tragrahmens gerichteten Abschnitts mit dem festen Anlenkpunkt zusammenwirkt.

Vorteilhafterweise kann vorgesehen sein, dass die Abstandsbestimmungseinheit den Abstand zum Boden mittels Ultraschall, Laser und/oder einem mechanischen Taster bestimmt. Insbesondere ein Ultraschallsensor eignet sich sehr gut für die Abstandsbestimmung der Scharrahmens, da dieser günstig und in besonders robusten Ausführungen verfügbar ist.

Ferner kann vorgesehen sein, dass die Höhenverstellung des Scharrahmens mittels eines elektrischen, pneumatischen und/oder hydraulischen Aktuators erfolgt.

Vorzugsweise ist die Steuereinheit dazu ausgelegt, den Abstand des Scharrahmens zum Boden auf ein konstantes Niveau zu regeln. Dies stellt eine sehr einfache und dennoch vorteilhafte Umsetzung der erfinderischen Idee dar, die eine optimale Bodenanpassung eines einfach und daher robusten Scharsystems ermöglicht und auf die bisherige getrennte Betrachtung von Bodenanpassung des Scharrahmens sowie die Verstellung der Arbeitstiefe erstmalig gemeinsam betrachtet und löst.

Nach einer vorteilhaften Modifikation der Erfindung kann vorgesehen sein, dass zwei in Arbeitsrichtung hintereinander angeordnete Reihen von Säscharen in gestaffelter Anordnung vorgesehen sind, wobei jedem Säschar eine zugehörige Druckrolle nachgeordnet ist.

Dabei kann eine erste Reihe von Säscharen mit ihren jeweiligen Säscharträgern an eine erste Querachse des Scharrahmens angreifen, eine zweite Reihe von Säscharen mit ihren jeweiligen Säscharträgern an eine zweite Querachse des Scharrahmens angreifen, wobei die erste Querachse und die zweite Querachse in der Arbeitsrichtung der Vorrichtung zueinander beabstandet sind.

Der reihenartige Versatz der Säscharen in Fahrtrichtung bzw. Arbeitsrichtung vergrößert den Querabstand von benachbarten Säscharen, so dass diese sich gegenseitig weniger stören, durch die nachgeordneten Säscharen aber dennoch aber ein sehr kleiner Abstand zwischen den Saatrillen möglich ist.

Sind mehrere hintereinander angeordnete Säscharen oder Säscharreihen vorhanden, kann es von Vorteil sein, dass die erste Querachse und die zweite Querachse in einer Arbeitsstellung der Vorrichtung in etwa dasselbe Höhenniveau aufweisen, vorzugsweise der Höhenunterschied weniger als ein doppelter Querschnittsachsendurchmesser, bevorzugterweise weniger als ein Querschnittsachsendurchmesser der ersten oder der zweiten Querschnittsachse ist.

Ferner kann vorgesehen sein, dass die Vorrichtung ein nicht-parallelogrammgeführtes Scharsystem ist.

Zudem kann die Vorrichtung derart fortgebildet werden, dass genau eine Abstandsbestimmungseinheit vorgesehen ist.

Alternativ dazu können aber auch mindestens zwei Abstandsbestimmungseinheiten vorgesehen sein, wobei die Steuereinheit dann dazu ausgelegt ist, die Signale der mindestens zwei Abstandsbestimmungseinheiten zu mitteln, um auf Grundlage des gemittelten Signals eine Höhenverstellung des Scharrahmens vorzunehmen.

Nach einem weiteren vorteilhaften Aspekt umfasst die Vorrichtung einen Scharrahmen, dessen Längsrichtung sich quer zu einer Arbeitsrichtung der Vorrichtung erstreckt, mindestens einen Säscharträger, der sich in Arbeitsrichtung gesehen nach hinten von dem Scharrahmen erstreckt und mit einem zugehörigen Säschar verbunden ist, wobei der Scharrahmen mindestens eine Querachse aufweist, die bodenparallel und quer zur Arbeitsrichtung verläuft und einen Anlenkpunkt für den Säscharträger darstellt. Dabei ist der Säscharträger an der Querachse angelenkt und in einer Arbeitsstellung der Vorrichtung vom Anlenkpunkt aus zunächst weg vom Boden und vorzugsweise von dem Anlenkpunkt aus in Arbeitsrichtung nach hinten geführt.

Durch das Heranführen des mindestens einen Säscharträgers an die Querachse des Scharrahmens von oben herab, ist es möglich, den Scharrahmen tiefer anzuordnen, so dass die Höhe des Gesamtaufbaus verringert ist und hieran durchzuführende Wartungsarbeiten leichter auszuführen sind. Zudem sind notwendige Inspektionsarbeiten an den Säscharträgern oder auch ein Austausch nun leichter und angenehmer zu bewerkstelligen. Insbesondere dann, wenn ein Säscharträger inmitten einer ganzen Reihe von Säscharträgern auszutauschen ist, ist dies nun einfacher, da die aus dem Stand der Technik übliche Anbindung des Trägers an den Scharrahmen von unten heran einen solchen Austausch verkompliziert.

Alternativ oder zusätzlich kann vorgesehen sein, dass die mindestens eine Querachse des Scharrahmens in einer Arbeitsstellung der Vorrichtung einen Abstand zum Boden aufweisen, der geringer ist als der Durchmesser eines als Scheibenschar verkörperten Säschars und/oder einer mit dem Säscharträger verbundenen Druckrolle.

Der Scharrahmen kann neben der Querachse eine weitere hintere Querachse aufweisen, die zueinander in Arbeitsrichtung versetzt angeordnet sind und jeweils bodenparallel und quer zur Arbeitsrichtung verlaufen sowie jeweils einen Anlenkpunkt für den Säscharträger darstellen, wobei mindestens ein weiterer Säscharträger an der hinteren Querachse angelenkt ist und der Scharschritt, also der in Arbeitsrichtung vorliegende Abstand der zueinander in Arbeitsrichtung versetzt angeordneten Säscharen, größer oder gleich dem Abstand in Arbeitsrichtung der beiden zueinander versetzt angeordneten Querachsen ist.

Der reihenartige Versatz der Säscharen in Fahrtrichtung bzw. Arbeitsrichtung vergrößert den Querabstand von benachbarten Säscharen, so dass diese sich gegenseitig weniger stören, durch die nachgeordneten Säscharen aber dennoch aber ein sehr kleiner Abstand zwischen den Saatrillen möglich ist.

Darüber hinaus kann vorgesehen sein, dass der mindestens eine Säscharträger ein rohr- und/oder stangenförmiges Gebilde ist, das vorzugsweise im Wesentlichen nur ein rohr- oder stangenförmiges Element aufweist, von dem die Verbindung zu dem Säschar abgeht.

Durch die Ausbildung des Säscharträgers als rohr- oder stangenförmiges Gebilde wird die im Stand der Technik weit verbreitete Ausgestaltung des Trägers in Form eines Parallelogramms ausgeschlossen, die hinsichtlich ihres Aufbaus deutlich komplexer und in Bezug auf ihr Gewicht auch deutlich schwerer ist. Vorteilhafterweise kann der Säscharträger im Wesentlichen eine längliche, stangenförmige Form einnehmen, die einen bogenförmigen oder gewinkelten Abschnitt in einem Bereich hin zum Anlenkpunkt zu der Querachse aufweist.

Nach einer weiteren vorteilhaften Ausgestaltung der Erfindung weist der mindestens eine Säscharträger an seinem zum Scharrahmen entfernten Ende eine gelenkige Verbindung zu einer Druckrolle auf, und ist vorzugsweise an seinem anderen Ende mit der Querachse gekoppelt.

Dabei kann vorgesehen sein, dass die Kopplung mit der Querachse elastisch ausgebildet ist, um den Bodenkonturen besser folgen und evtl. Hindernissen wie Steinen ausweichen zu können. Um dies zu erreichen sind die Scharwerkzeuge mittels Säscharträgers an einer zugehörigen Querachse elastisch, unter Wirkung einer Bodenandruckkraft nachgiebig gelagert, so dass die Scharwerkzeuge elastisch nach oben ausgelenkt und nach unten zurückgestellt werden können, wenn die Vorrichtung über eine wellige Bodenkontur fährt oder das jeweilige Scharwerkzeug auf einen Stein trifft. Die genannten Säscharträger können dabei mittels Gummiquetschlagern elastisch bzw. beweglich an der Querachse aufgehängt werden, wobei die genannten Gummiquetschlagerelemente in Zwischenräumen zwischen einem Lagerkopf des jeweiligen Säscharträgers und der genannten Querachse angeordnet sein können. Beispielsweise kann ein Säschartragarm-Lagerkopf hülsenförmig die Querachse umgreifen und dabei wie die Querachse einen von der Kreisform abweichenden Querschnitt bzw. eine entsprechende mantelflächenseitige Konturierung umfassen, so dass sich für die Gummiquetschlagerelemente Aufnahmetaschen ergeben, deren Querschnittskontur sich bei Verschwenken bzw. Bewegen der Säscharträger verändern und eine entsprechende Verformung der Gummiquetschlagerelemente implizieren.

Mit einer solchen elastischen Aufhängung mittels Gummiquetschlagerelementen lässt sich eine wartungsfreie Drehlagerung und darüber hinaus auch eine Vorspannung des Systems bewirken. Neben der genannten Wartungsfreiheit ist dabei auch das elastische Verhalten infolge von Seitenkräften, die beispielsweise durch Schrägstellung der Scharscheiben auftreten können, von Vorteil.

Nach einer optionalen Fortbildung der Erfindung kann vorgesehen sein, dass der mindestens eine Säscharträger einen Anlenkabschnitt zum Ankoppeln an die Querachse, einen dem Anlenkabschnitt nachfolgenden oder sich hieran anschließenden Bogenabschnitt und einen dem Bogenabschnitt nachfolgenden oder sich hieran anschließenden geradlinigen Abschnitt aufweist oder hieraus besteht.

Diese besonders einfache Ausgestaltung des Säscharträgers ist einfach herzustellen und robust, so dass dieses Bauteil eine geringe Wartungsintensität erfordert.

Ferner kann hierbei vorgesehen sein, dass das Säschar eines jeweiligen Säscharträgers am geradlinigen Abschnitt abgeht oder über ein Stützelement hieran befestigt ist, und vorzugsweise der Säscharträger an seinem zum Scharrahmen entfernten Ende eine gelenkige Verbindung mit einer Druckrolle aufweist

Vorteilhafterweise kann zudem vorgesehen sein, dass der mindestens eine von der vorderen Querachse abgehende Säscharträger so geformt ist, dass er ausgehend von einem angelenkten Zustand an der vorderen Querachse oberhalb der hinteren Querachse in Arbeitsrichtung gesehen nach hinten verläuft, die hintere Querachse also oberhalb ihrer bodenabgewandten Seite passiert.

Die bringt unter anderem den Vorteil mit sich, dass dadurch die hintere Querachse durchgängig ausgestaltet sein kann. Zudem wirkt die hintere Querachse auch nicht als Ausschlagbegrenzung für den Säscharträger, falls der an der vorderen Querachse angelenkte Säscharträger nach oben weg ausgelenkt wird, bspw. aufgrund eines Auftreffens des daran befestigten Säschars auf einen Stein oder dergleichen.

Nach einer weiteren optionalen Fortbildung der Erfindung kann vorgesehen sein, dass der mindestens eine Säscharträger nicht-parallelogrammgeführt an dem Scharrahmen angebunden ist.

Vorteilhafterweise kann die Querachse durchgängig entlang der gesamten Arbeitsbreite der Vorrichtung verlaufen, wobei vorzugsweise jede Querachse zum Ankoppeln eines Scharträgers der Vorrichtung durchgängig entlang der gesamten Arbeitsbreite der Vorrichtung verläuft.

Ferner kann vorgesehen sein, dass der mindestens eine von der hinteren Querachse abgehende Säscharträger und der mindestens eine von der vorderen Querachse abgehende Säscharträger in ihrem Grundaufbau identisch, vorzugsweise vollständig identisch ausgebildet sind.

So kann der mindestens eine an der hinteren Querachse angelenkte Säscharträger zwar im Wesentlichen den gleichen Grundaufbau haben, insgesamt aber etwas länger ausgestaltet sein als ein an der vorderen Querachse angelenkter Träger, um einen Scharschritt zu erhalten, der länger als der Abstand der beiden Querachsen in Arbeitsrichtung ist. Typischerweise wird dies durch eine Verlängerung des dem bogenförmigen oder gewinkelten Abschnitt nachfolgenden geradlinigen Abschnitt des Säscharträgers erreicht. Vorteilhaft hieran ist, dass die Baulänge des Scharrahmens kompakter ist als im Fall einer Verwirklichung des Scharschritts mit gleichlangen Trägern allein auf Grundlage des Versatzes der Querachsen zueinander. Wird der Scharschritt teilweise mit Hilfe des Versatzes der Querachsen und durch unterschiedlich lange Säscharträger erreicht ergibt sich ein Optimum aus Baulänge des Scharrahmens, einer Bodenanpassung, einer Ablagentiefeneinstellung und des aufgebrachten Schardrucks. Würde man hingegen den Scharschritt nur mit Hilfe einer unterschiedlich langen Ausgestaltung der Träger erzeugen, variiert die Säscharträgerlänge der unterschiedlichen Träger sehr stark, was zu einer Verschlechterung der Bodenanpassung, einem ungleichmäßigen Schardruck und einer unterschiedlichen Ablagetiefeneinstellung führt. Alternativ oder zusätzlich dazu kann für eine Variation des Scharschritts auch eine nach hinten versetzte Anbindung der Säscharverbindung zum Säscharträger genutzt werden, so dass nicht zwangsläufig die Gesamtlänge des Trägers verlängert werden muss.

Demnach kann also vorgesehen sein, dass der mindestens eine von der hinteren Querachse abgehende Säscharträger den von der vorderen Querachse abgehende Säscharträger in seiner Längsausdehnung überragt, vorzugsweise durch Ausbilden eines längeren geradlinig verlaufenden Abschnitts.

Ferner kann vorgesehen sein, dass mindestens zwei in Arbeitsrichtung hintereinander angeordnete Reihen von Säschären in gestaffelter Anordnung vorgesehen sind, wobei jedem Säschar vorzugsweise eine zugehörige Druckrolle nachgeordnet ist.

Dabei kann vorgesehen sein, dass eine erste Reihe von Säscharen mit ihren jeweiligen Säscharträgern an der vorderen Querachse des Scharrahmens angreifen und eine zweite Reihe von Säscharen mit ihren jeweiligen Säscharträgern an der hinteren Querachse des Scharrahmens angreifen.

Zudem kann vorteilhafterweise vorgesehen sein, dass die vordere Querachse und die hintere Querachse in einer Arbeitsstellung der Vorrichtung in etwa dasselbe Höhenniveau aufweisen, vorzugsweise der Höhenunterschied weniger als ein doppelter Querschnittsachsendurchmesser, bevorzugterweise weniger als ein Querschnittsachsendurchmesser der hinteren oder der vorderen Querachse ist.

Die Erfindung betrifft ferner eine landwirtschaftliche Maschine mit einer Vorrichtung nach einer der vorhergehen beschriebenen Varianten.

Weitere Merkmale, Einzelheiten und Vorteile der vorliegenden Erfindung werden anhand der nachfolgenden Figurenbeschreibung ersichtlich. Dabei zeigen:
- Fig. 1:: eine perspektivische Ansicht eines Ausführungsbeispiels einer erfindungsgemäßen Vorrichtung,
- Fig. 2:: eine Seitenansicht der Vorrichtung aus Fig. 1 mit erläuternden Darstellungen, und
- Fig. 3:: eine Seitenansicht der Vorrichtung aus Fig. 1 mit erläuternden Darstellungen zu einem weiteren vorteilhaften Aspekt.

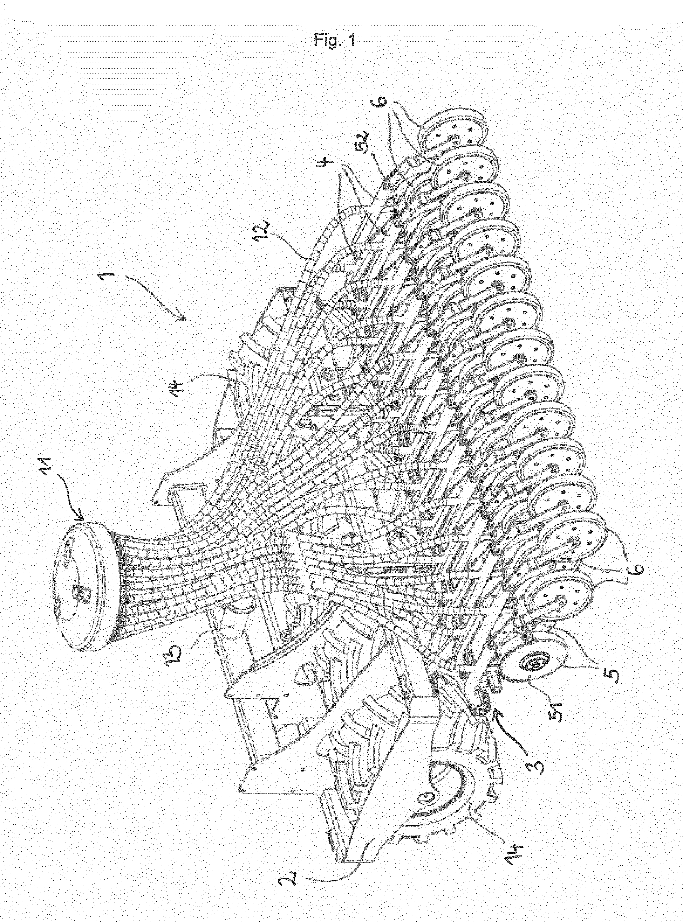

Fig. 1 zeigt eine perspektivische Darstellung eines Teils einer Sämaschine, welche die Vorrichtung 1 zeigt. Dargestellt ist eine bspw. durch einen Traktor schleppbare Vorrichtung 1, die über ein in Fig. 1 nicht erkennbares Koppelelement am Tragrahmen 2 mit einer entsprechenden Zugmaschine verbindbar ist. Gestützt wird der Tragrahmen 2 unter anderem von einer Reifenanordnung 14, die aus mehreren nebeneinander angeordneten Reifen besteht. In Fig. 1 sind insgesamt sechs Reifen 14 zum Stützen des Tragrahmens 2 vorgesehen, die abwechselnd zueinander in Antriebsrichtung der Vorrichtung 1 leicht versetzt zueinander angeordnet sind. Für die vorliegende Erfindung ist jedoch auch eine Anordnung der Reifen 14 auf einer gemeinsamen Rotationsachse denkbar.

Der Tragrahmen 2 weist darüber hinaus eine Saatzuführleitung 13 auf, die das in den Ackerboden 7 einzubringende Saatgut zu einer Vereinzelungsanlage 11 führt. Dies kann beispielsweise mittels Druckluft oder Saugluft passieren. Von der Vereinzelungsanlage 11 gehen dabei mehrere Leitungen 12 zum Führen von vereinzeltem Saatgut ab. Jede der Leitungen 12 wirkt dabei mit einem zugehörigen Säschar 5 zusammen, so dass das in der Leitung 12 geführte vereinzelte Saatgut in die durch das Säschar 5 gebildete Furche eingelegt werden kann.

Das Säschar 5 ist dabei durch eine Doppelscheibe umgesetzt, die zwei zueinander spitzwinklig geneigte Säscheiben umfasst, die nach unten hin aufeinander zulaufen. Andere Formen der Ausgestaltung des Säschars sind aber ebenfalls möglich.

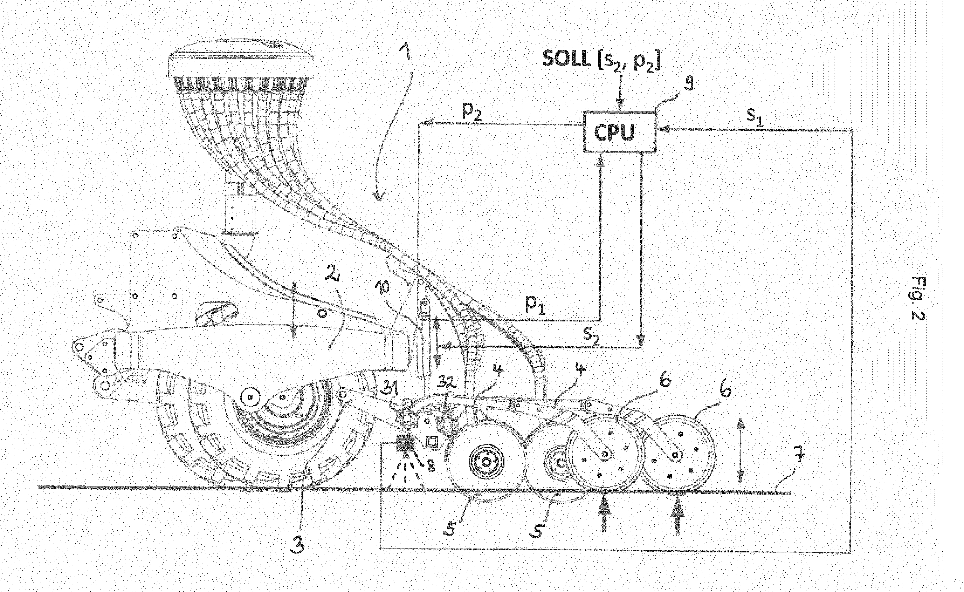

Jedes der Säscharen 5 ist dabei, wie Fig. 2 zeigt, über einen Säscharträger 4 mit einem Scharrahmen 3 verbunden, der höhenverstellbar gegenüber dem Tragrahmen 2 vorgesehen ist. Der Scharrahmen 3 weist mindestens eine quer zur Fahrtrichtung angeordnete Querachse 31, 32 auf, von der ein Teil oder alle Säscharträger 4 der Vorrichtung 1 abgehen. In der vorliegend in Fig. 1 dargestellten Ausführungsform gibt es zwei in Fahrtrichtung hintereinander angeordnete Säscharreihen, wobei jeweils mittig zwischen zwei benachbarten in Fahrtrichtung vorne angeordneten Säscharen ein dazu zurückversetztes Säschar angeordnet ist. Dies erlaubt einen vorteilhaften Querabstand von Säscharen einer Reihe und einen dazu verkleinerten Reihenabstand der Sährillen.

Jeder Säscharträger weist an seinem vom Scharrahmen beabstandeten Ende eine Ankopplung für eine Druckrolle auf, die gelenkig von dem Säscharträger 4 abgeht. Diese kann sich dabei um eine bodenparallele, quer zur Fahrtrichtung orientierte Schwenkachse drehen und ist mit einem Spannmittel versehen, das die Drückrolle in Bodenrichtung vorspannt, so dass bei einem Eindringen des Säschars in den Ackerboden die Druckrolle einen gewissen Anpressdruck auf den Ackerboden ausübt.

Der Scharrahmen 3 ist dabei über eine Verstelleinheit, bspw. eine oder auch mehrere Zylinderanordnungen 10, mit dem Tragrahmen 2 verbunden, so dass je nach Stellung der Verstelleinheit der Scharrahmen 3 gegenüber dem Tragrahmen 2 abgesenkt oder angehoben werden kann.

Darüber hinaus ist es von Vorteil, wenn die Verstelleinheit nicht die einzige Anbindung zwischen dem Scharrahmen 3 und dem Tragrahmen 2 ist, da dies zu einer besonders stabilen und robusten Verstelleinheit führen würde, die nicht nur die Verstellkräfte in Höhenrichtung sondern darüber hinaus auch die in Fahrtrichtung wirkenden Schleppkräfte übertragen müsste. Zwar ist dies umfasst, vorliegend ist aber eine weitere Anbindung des Scharrahmens 3 an dem Tragrahmen 2 möglich, da der Scharrahmen 3 sich in Fahrtrichtung erstreckende Elemente aufweist, die über eine eindimensionale Scharnierverbindung, bspw. durch einen Steckbolzen, mit dem Tragrahmen 2 befestigt werden können. Verändert man nun die Höhe des Scharrahmens 3 kommt es somit zu einer kreissegmentförmigen Bewegung des Scharrahmens 3 entlang des fixen Anlenkpunkts.

Es ist nun besonders vorteilhaft, die Höheneinstellung bzw. den Abstand des Scharrahmens 3 gegenüber dem Tragrahmen 2 während eines Überfahrens eines zu bearbeitenden Bodens 7 nicht konstant zu lassen, sondern permanent hinsichtlich eines Bodenabstands nachzuregeln und somit auch gleichzeitig die Eindringtiefe der Säscharen und die hieraus resultierende Ablagetiefe des Saatguts zu steuern und auf gleichbleibendem Niveau zu halten.

Fig. 2 zeigt dabei eine Seitenansicht der Vorrichtung 1. Man erkennt eine Abstandsbestimmungseinheit 8, die an dem Scharrahmen 3 angeordnet ist und einen Abstand zum überfahrenen Boden 7 misst. Diese liefert ein Abstandssignal S₁ an eine Steuereinheit 9, die in Abhängigkeit dieses Signals S₁ den Scharrahmen 3 durch Verstellen der Verstelleinheit 10 in seiner Höhe an das Bodenniveau anpasst, so dass der Abstand zum Tragrahmen 2 bei Überfahren einer Bodenwelle oder dergleichen variiert. Ziel der Steuerung bzw. Regelung ist es, den Abstand des Scharrahmens zum Boden konstant zu halten.

Erkennt die Abstandsbestimmungseinheit 8 ein Ansteigen des Bodens 7, verringert sich also der gemessene Abstand, so führt dies zu einem Anheben des Scharrahmens 3, wodurch auch die Säscharen angehoben und folglich mit gleicher Tiefe in dem angestiegenen Boden 7 eindringen. Umgekehrt gilt dies selbstverständlich auch bei einem Absinken des Bodens.

Die Steuereinheit 9 wirkt also mit dem Stellsignal S₂ auf eine entsprechende Veränderung in dem Verstellmittel 10 hin. Zudem erhält die Steuereinheit 9 die entsprechenden Soll- und Ist-Druckwerte P₁, P₂ bei einer hydraulisch oder pneumatisch umgesetzten Verstelleinheit, damit ein permanenter Abgleich mit den gewünschten Sollwerten stattfinden kann.

Dadurch gelingt es, den Scharrahmen 3 und die davon abgehenden Scharträger 4 mit gleichem Abstand über einen in seinem Bodenniveau variierenden Ackerboden zu führen, so dass die Säscharen 5 trotz wechselndem Bodenniveau oder wechselnder Bodenbeschaffenheit das Saatgut in gleichbleibender Bodentiefe ablegen.

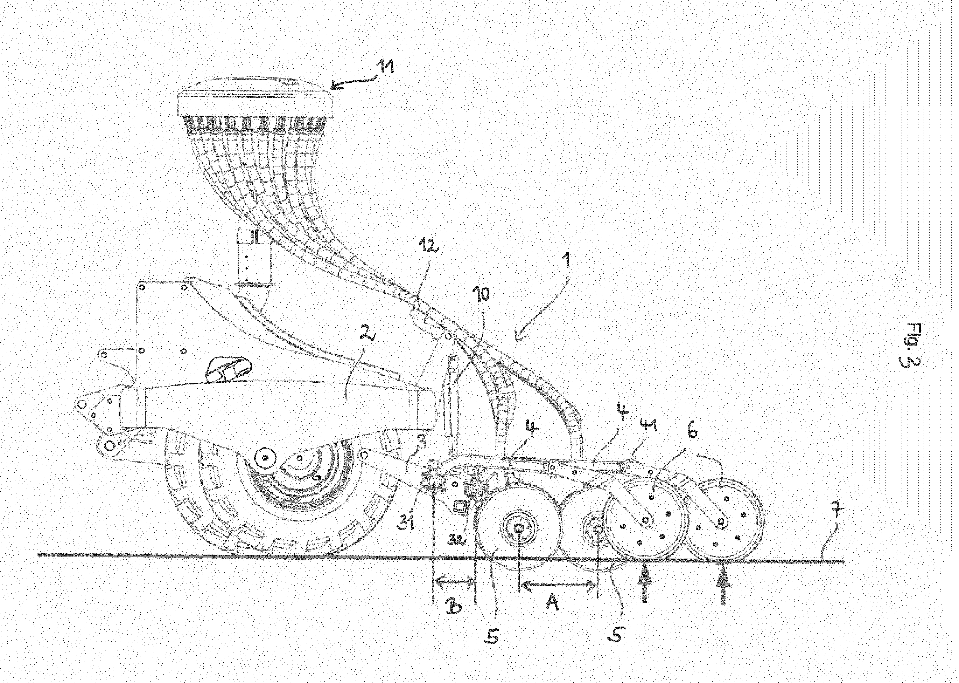

Wie Fig. 3 zeigt, liegt eine weitere Besonderheit darin, dass der Säscharträger 4 vom Anlenkpunkt an die jeweilige Querachse 3 zunächst vom Boden weg, in Arbeitsrichtung bzw. Schlepprichtung nach hinten geführt ist. Ist nun ein solcher Säscharträger an der vorderen Querachse angelenkt, passiert der Säscharträger 4 die hintere Querachse an deren bodenabgewandten Seite, läuft also oberhalb der hinteren Querachse über diese hinweg. Man erkennt, dass auch die von der hinteren Querachse abgehenden Säscharträger 4 eine ähnlich oder identische Ausgestaltung aufweisen, also ebenfalls in einer Arbeitsstellung der Vorrichtung zunächst nach hinten oben vom Anlenkpunkt weg verlaufen.

Fig. 3 zeigt dabei eine Seitenansicht der Vorrichtung 1, aus der man die spezifische Ausgestaltung der Säscharträger 4 gut entnehmen kann. So sieht man, dass - in einer Arbeitsposition der Vorrichtung - der von der vorderen Querachse abgehende Säscharträger 4 bei einem gedanklich mit seinem Ursprung im Querschnittsmittelpunkt der vorderen Querachse angeordneten Koordinatensystem zunächst oder vollständig im ersten Quadranten dieses Koordinatensystems verläuft. Das Koordinatensystem weist demnach ein x-Achse auf, die parallel zum Boden 7 ist und eine Y-Achse, die parallel zur Vertikalen auf den Boden 7 ist.

Selbiges gilt auch für diejenigen von der hinteren Querachse abgehenden Säscharträger, die ebenfalls nach hinten oben vom Anlenkpunkt abgehen.

Wie Fig. 3 zeigt, kann der Säscharträger aus einem Anlenkelement und einem sich daran anschließenden bogenförmigen rohrartigen Abschnitt, an dem sich ein geradliniger rohrartiger Abschnitt anschließt, bestehen. Das Säschar 5 wird über ein Stützelement gelagert, das am geradlinigen Abschnitt des Trägers 4 angeordnet ist. Darüber hinaus ist vorliegend auch die Leitung zum Führen des vereinzelten Saatguts (oder auch Düngers) ebenfalls an dem geradlinigen Abschnitt befestigt oder durch den Träger 4 hindurchgeführt.

An ihrem vom Anlenkpunkt abgewandten Ende weisen die stabförmig ausgebildeten Säscharträger ein Gelenk zum Aufnehmen einer Drückrollenbefestigung auf, wobei dieses Gelenk in Bodenrichtung vorgespannt ist, so dass die Druckrolle 6 gegen den Boden 7 vorgespannt ist. Diese auf den Boden wirkende Kraft wird mithilfe der vertikal ausgerichteten Pfeile dargestellt.

Man erkennt in der Fig. 3 auch, dass der Scharschritt A, also der Abstand der in Arbeitsrichtung versetzt zueinander angeordneten hinteren und vorderen Säscharreihen, vorliegend nicht allein auf den Abstand B zwischen den Querachsen zurückzuführen ist, sondern auch auf unterschiedlich lange Säscharträger 4 bzw. eine daran zurückversetzte Anordnung an den jeweiligen Trägern zurückgeht.

## Patentansprüche

1. Scharsystem für eine landwirtschaftliche Maschine, umfassend:
einen Tragrahmen (2) zum Ankoppeln an die landwirtschaftliche Maschine,
einen Scharrahmen (3), der mit dem Tragrahmen (2) verbunden ist und dessen Längsrichtung sich quer zu einer Arbeitsrichtung der Vorrichtung (1) erstreckt,
mindestens einen länglichen Säscharträger (4), der in Arbeitsrichtung von dem Scharrahmen (3) abgeht und ein Säschar (5) sowie eine der Säschar (5) nachgeordnete Druckrolle (6) aufweist, wobei
der Scharrahmen (3) höhenverstellbar gegenüber dem Tragrahmen (2) ist, um eine Eindringtiefe des Säschars (5) in einen landwirtschaftlich zu bearbeitenden Boden (7) einstellen zu können, wobei der Scharrahmen (3) und der Tragrahmen (2) über mindestens eine in ihrer Länge veränderbare Zylinderanordnung (10) miteinander verbunden sind, sowie
eine Steuereinheit (9) zum Höhenverstellen des Scharrahmens (3),
**dadurch gekennzeichnet, dass**
eine Abstandsbestimmungseinheit (8) zum Erfassen eines Bodenabstands des Scharrahmens (3) vorgesehen ist, und
die Steuereinheit (9) dazu ausgelegt ist, den Scharrahmen (3) beim Überfahren eines Bodens (7) in Abhängigkeit eines Signals (S₁) der Abstandsbestimmungseinheit (8) in seiner Höhe zu verstellen,
wobei der Scharrahmen (3) ferner über einen festen Anlenkpunkt mit dem Tragrahmen (2) verbunden ist, so dass eine Höhenverstellung des Scharrahmens (3) zu dem Tragrahmen (2) zu einer Kreisbewegung führt, deren Mittelpunkt der feste Anlenkpunkt ist und die Steuereinheit (9) dazu ausgelegt ist, in Abhängigkeit des erfassten Bodenabstands die Länge der mindestens einen Zylinderanordnung (10) zu variieren.

2. Scharsystem nach Anspruch 1, wobei die Steuereinheit (9) dazu ausgelegt ist, in Abhängigkeit eines Signals (S1) der Abstandsbestimmungseinheit (8) den Scharrahmen (3) in seiner Höhe so zu verstellen, dass beim Überfahren eines Bodens (7) der Säscharträger (4) auf Höhe des Säschars (5) einen konstanten Bodenabstand beibehält und/oder dass der Scharrahmen (3) beim Überfahren eines Bodens (7) einen konstanten Bodenabstand beibehält, insbesondere den Abstand des Scharrahmens (3) zum Boden (7) auf ein konstantes Niveau zu regeln.

3. Scharsystem nach einem der vorhergehenden Ansprüche, wobei genau zwei Zylinderanordnungen (10) vorgesehen sind, welche die Höhenverstellung des Scharrahmens (3) zu dem Tragrahmen (2) vornehmen.

4. Scharsystem nach einem der vorhergehenden Ansprüche, wobei die Abstandsbestimmungseinheit (8) den Abstand zum Boden (7) mittels Ultraschall, Laser und/oder einem mechanischen Taster bestimmt und an der Vorrichtung (1) so angeordnet ist, dass sie in Arbeitsrichtung gesehen dem Säschar (5) vorgelagert ist und vorzugsweise an dem Scharrahmen (3) befestigt ist.

5. Scharsystem nach einem der vorhergehenden Ansprüche, wobei mindestens zwei in Arbeitsrichtung hintereinander angeordnete Reihen von Säschären (51, 52) in gestaffelter Anordnung vorgesehen sind, wobei jedem Säschar (51, 52) eine zugehörige Druckrolle (6) nachgeordnet ist, wobei eine erste Reihe von Säscharen (51) mit ihren jeweiligen Säscharträgern (4) an eine erste Querachse (31) des Scharrahmens (3) angreifen, eine zweite Reihe von Säscharen (52) mit ihren jeweiligen Säscharträgern (4) an eine zweite Querachse (32) des Scharrahmens (3) angreifen, wobei die erste Querachse (31) und die zweite Querachse (32) in der Arbeitsrichtung der Vorrichtung (1) zueinander beabstandet sind, wobei die erste Querachse (31) und die zweite Querachse (32) in einer Arbeitsstellung der Vorrichtung (1) in etwa dasselbe Höhenniveau aufweisen, vorzugsweise der Höhenunterschied weniger als ein doppelter oder weniger als ein Querschnittsdurchmesser der ersten oder der zweiten Querachse (31, 32) ist.

6. Scharsystem nach einem der vorhergehenden Ansprüche, wobei die Vorrichtung (1) ein nicht-parallelogrammgeführtes Scharsystem ist.

7. Scharsystem nach einem der vorhergehenden Ansprüche, wobei genau eine Abstandsbestimmungseinheit (8) vorgesehen ist.

8. Scharsystem nach einem der vorhergehenden Ansprüche 1 - 6, wobei mindestens zwei Abstandsbestimmungseinheiten (8) vorgesehen sind und die Steuereinheit (9) dazu ausgelegt ist, die Signale der mindestens zwei Abstandsbestimmungseinheiten (8) zu mitteln, um auf Grundlage des gemittelten Signals eine Höhenverstellung des Scharrahmen (3) vorzunehmen.

9. Scharsystem nach Anspruch 1, wobei der Scharrahmen (3) mindestens eine Querachse (31, 32) aufweist, die bodenparallel und quer zur Arbeitsrichtung verläuft und einen Anlenkpunkt für den Säscharträger (4) darstellt,
wobei der Säscharträger (4) an der Querachse (31, 32) angelenkt ist und in einer Arbeitsstellung der Vorrichtung (1) vom Anlenkpunkt aus zunächst weg vom Boden (7), vorzugsweise in Arbeitsrichtung nach hinten geführt ist.

10. Scharsystem nach Anspruch 9, wobei der Scharrahmen (3) neben der Querachse (31) eine weitere hintere Querachse (32) aufweist, die zueinander in Arbeitsrichtung versetzt angeordnet sind und jeweils bodenparallel und quer zur Arbeitsrichtung verlaufen sowie jeweils einen Anlenkpunkt für den Säscharträger (4) darstellen, wobei mindestens ein weiterer Säscharträger (4) an der hinteren Querachse (32) angelenkt ist und der Scharschritt (A), also der in Arbeitsrichtung vorliegende Abstand der zueinander versetzt angeordneten Säscharen (51, 52), größer oder gleich dem Abstand (B) in Arbeitsrichtung der beiden zueinander versetzt angeordneten Querachsen (31 ,32) ist.

11. Scharsystem nach Anspruch 5 oder einem der auf Anspruch 5 rückbezogenen Ansprüche, wobei der mindestens eine von der vorderen Querachse (31, 32) abgehende Säscharträger (4) so geformt ist, dass er ausgehend von einem angelenkten Zustand an der vorderen Querachse (31) oberhalb der hinteren Querachse (32) in Arbeitsrichtung gesehen nach hinten verläuft, die hintere Querachse (32) also oberhalb ihrer bodenabgewandten Seite passiert und ein rohr- und/oder stangenförmiges Gebilde ist, das vorzugsweise im Wesentlichen nur ein rohr- oder stangenförmiges Element aufweist, welches mit dem Säschar (5) verbunden ist.

12. Scharsystem nach Anspruch 5 oder einem der auf Anspruch 5 rückbezogenen Ansprüche, wobei der mindestens eine Säscharträger (4) an seinem zum Scharrahmen (3) entfernten Ende eine gelenkige Verbindung (41) zu einer Druckrolle (6) aufweist, und vorzugsweise an seinem anderen Ende mit der Querachse (31, 32) gekoppelt ist und/oder einen Anlenkabschnitt zum Ankoppeln an die Querachse (31, 32), einen dem Anlenkabschnitt nachfolgenden oder sich hieran anschließenden Bogenabschnitt und einen dem Bogenabschnitt nachfolgenden oder sich hieran anschließenden geradlinigen Abschnitt aufweist, wobei das Säschar (5) eines jeweiligen Säscharträgers (4) am geradlinigen Abschnitt befestigt ist, und vorzugsweise der Säscharträger (4) an seinem zum Scharrahmen (3) entfernten Ende eine gelenkige Verbindung (41) mit einer Druckrolle (6) aufweist.

13. Scharsystem nach einem der vorhergehenden Ansprüche, wobei der mindestens eine Säscharträger (4) nicht-parallelogrammgeführt an dem Scharrahmen (3) angebunden ist.

14. Scharsystem nach Anspruch 5 oder einem der auf Anspruch 5 rückbezogenen Ansprüche, wobei die Querachse (31, 32) durchgängig entlang der gesamten Arbeitsbreite der Vorrichtung (1) verläuft, vorzugsweise jede Querachse (31 ,32) zum Ankoppeln eines Säscharträgers (4) der Vorrichtung (1) durchgängig entlang der gesamten Arbeitsbreite der Vorrichtung (1) verläuft.

15. Scharsystem nach einem der vorhergehenden Ansprüche 9 - 14, wobei der mindestens eine von der hinteren Querachse (32) abgehende Säscharträger (4) und der mindestens eine von der vorderen Querachse (31) abgehende Säscharträger (4) in ihrem Grundaufbau identisch, vorzugsweise vollständig identisch ausgebildet sind, wobei der mindestens eine von der hinteren Querachse (32) abgehende Säscharträger (4) den von der vorderen Querachse (31) abgehende Säscharträger (4) in seiner Längsausdehnung überragt, vorzugsweise durch Ausbilden eines längeren geradlinig verlaufenden Abschnitts.

16. Landwirtschaftliche Maschine mit einem Scharsystem, das gemäß einem der vorhergehenden Ansprüche ausgebildet ist.

## Claims

1. A coulter system for an agricultural machine, comprising:
a support frame (2) for coupling to the agricultural machine,
a coulter frame (3), which is connected to the support frame (2) and the longitudinal direction of which extends transversely to a working direction of the apparatus (1),
at least one elongated sowing coulter carrier (4), which goes off in the working direction from the coulter frame (3) and comprises a sowing coulter (5) and a pressure roller (6) located downstream of the sowing coulter (5), wherein
the coulter frame (3) is height-adjustable with respect to the support frame (2), to enable a penetration depth of the sowing coulter (5) into a piece of ground (7) that is to be agriculturally worked to be adjusted, wherein the coulter frame (3) and the support frame (2) are interconnected by at least one variable-length cylinder arrangement (10), and
a control unit (9) for adjusting the height of the coulter frame (3),
**characterized in that**
a distance determining unit (8) for detecting a ground clearance of the coulter frame (3) is provided, and
the control unit (9) is configured to adjust the height of the coulter frame (3) while traversing a piece of ground (7), depending on a signal (S₁) of the distance determining unit (8),
wherein the coulter frame (3) is additionally connected to the support frame (2) via a fixed pivot point, such that a height adjustment of the coulter frame (3) with respect to the support frame (2) leads to a circular movement, the midpoint of which is the fixed pivot point, and the control unit (9) is configured to vary the length of the at least one cylinder arrangement (10) depending on the detected ground clearance.

2. The coulter system according to claim 1, wherein the control unit (9) is configured to adjust the height of the coulter frame (3) depending on a signal (S1) of the distance determining unit (8) in such a way that, while traversing a piece of ground (7), the sowing coulter carrier (4) maintains a constant ground clearance at the height of the sowing coulter (5) and/or that the coulter frame (3), while traversing a piece of ground (7), maintains a constant ground clearance, in particular to adjust the distance from the coulter frame (3) to the ground (7) to a constant level.

3. The coulter system according to one of the preceding claims, wherein exactly two cylinder arrangements (10) are provided, which carry out the height adjustment of the coulter frame (3) with respect to the support frame (2).

4. The coulter system according to one of the preceding claims, wherein the distance determining unit (8) determines the distance to the ground (7) by means of ultrasound, laser and/or a mechanical probe and is arranged on the apparatus (1) in such a way that it is in front of the sowing coulter (5) when viewed in the working direction and is preferably attached to the coulter frame (3).

5. The coulter system according to one of the preceding claims, wherein at least two rows of sowing coulters (51, 52), arranged one behind the other in the working direction in a staggered arrangement, are provided, wherein an associated pressure roller (6) is arranged downstream of each sowing coulter (51, 52), wherein a first row of sowing coulters (51) acts with its respective sowing coulter carriers (4) on a first transverse axle (31) of the coulter frame (3), a second row of sowing coulters (52) acts with its respective sowing coulter carriers (4) on a second transverse axle (32) of the coulter frame (3), wherein the first transverse axle (31) and the second transverse axle (32) are spaced apart from each other in the working direction of the apparatus (1), wherein the first transverse axle (31) and the second transverse axle (32) are at approximately the same height in a working position of the apparatus (1), and preferably the height difference is less than twice or less than a cross-sectional diameter of the first or second transverse axle (31, 32).

6. The coulter system according to one of the preceding claims, wherein the apparatus (1) is a non-parallelogram-guided coulter system.

7. The coulter system according to one of the preceding claims, wherein exactly one distance determining unit (8) is provided.

8. The coulter system according to one of the preceding claims 1-6, wherein at least two distance determining units (8) are provided, and the control unit (9) is configured to average the signals of the at least two distance determining units (8) in order to carry out a height adjustment of the coulter frame (3) on the basis of the averaged signal.

9. The coulter system according to claim 1, wherein the coulter frame (3) has at least one transverse axle (31, 32), which extends parallel to the ground and transversely to the working direction and constitutes a pivot point for the sowing coulter carrier (4),
wherein the sowing coulter carrier (4) is hinged to the transverse axle (31, 32) and, when the apparatus (1) is in a working position, is initially guided from the pivot point away from the ground (7), preferably rearwards in the working direction.

10. The coulter system according to claim 9, wherein the coulter frame (3) has, in addition to the transverse axle (31), a further rear transverse axle (32), the two being arranged offset from one another in the working direction and each extending parallel to the ground and transversely to the working direction and each constituting a pivot point for the sowing coulter carrier (4), wherein at least one further sowing coulter carrier (4) is hinged to the rear transverse axle (32) and the coulter spacing (A), i.e., the distance between the mutually offset sowing coulters (51, 52) in the working direction, is greater than or equal to the distance (B) in the working direction between the two mutually offset transverse axes (31, 32).

11. The coulter system according to claim 5 or to one of the claims that refers to claim 5, wherein the at least one sowing coulter carrier (4) going off from the front transverse axle (31, 32) is shaped in such a way that, starting from a state in which it is hinged to the front transverse axle (31), it extends rearwards above the rear transverse axle (32) when viewed in the working direction, i.e. it passes the rear transverse axle (32) above the side thereof facing away from the ground, and is a tubular and/or rod-shaped structure, which preferably has essentially only one tubular or rod-shaped element, which is connected to the sowing coulter (5).

12. The coulter system according to claim 5 or to one of the claims that refers to claim 5, wherein the at least one sowing coulter carrier (4) at the end thereof remote from the coulter frame (3) has an articulated connection (41) to a pressure roller (6), and is preferably coupled at the other end thereof to the transverse axle (31, 32) and/or has a linkage section for coupling to the transverse axle (31, 32), a curved section following or adjoining the linkage section, and a straight section following or adjoining the curved section, wherein the sowing coulter (5) of a respective sowing coulter carrier (4) is attached to the straight section, and preferably the sowing coulter carrier (4) at the end thereof remote from the coulter frame (3) has an articulated connection (41) to a pressure roller (6).

13. The coulter system according to one of the preceding claims, wherein the at least one sowing coulter carrier (4) is connected to the coulter frame (3) in a non-parallelogram-guided manner.

14. The coulter system according to claim 5 or to one of the claims that refers to claim 5, wherein the transverse axle (31, 32) runs continuously along the entire working width of the apparatus (1), preferably each transverse axle (31, 32) for coupling a sowing coulter carrier (4) of the apparatus (1) runs continuously along the entire working width of the apparatus (1).

15. The coulter system according to one of the preceding claims 9-14, wherein the at least one sowing coulter carrier (4) going off from the rear transverse axle (32) and the at least one sowing coulter carrier (4) going off from the front transverse axle (31) are identical in their basic design, preferably completely identical in design, wherein the at least one sowing coulter carrier (4) going off from the rear transverse axle (32) extends beyond the sowing coulter carrier (4) going off from the front transverse axle (31) in the longitudinal extent thereof, preferably by forming a longer straight section.

16. An agricultural machine having a coulter system that is configured in accordance with one of the preceding claims.

## Revendications

1. Système de soc pour une machine agricole, comprenant :
un cadre portant (2) destiné au couplage avec la machine agricole,
un cadre de soc (3), qui est relié au cadre portant (2) et dont la direction longitudinale s'étend transversalement à une direction de travail du dispositif (1),
au moins un support de soc de semoir (4) allongé, qui part du cadre de soc (3) dans la direction de travail et qui présente un soc de semoir (5) ainsi qu'une roue plombeuse (6) placée en aval du soc de semoir (5), dans lequel
le cadre de soc (3) peut être réglé en hauteur par rapport au cadre portant (2) pour pouvoir régler une entrure du soc de semoir (5) dans un sol (7) à travailler de manière agricole, le cadre de soc (3) et le cadre portant (2) étant reliés l'un à l'autre par le biais d'au moins un agencement de vérin (10) dont la longueur peut être modifiée, ainsi que
une unité de commande (9) pour le réglage en hauteur du cadre de soc (3),
**caractérisé en ce que**
une unité de détermination de distance (8) destinée à détecter une distance au sol du cadre de soc (3) est prévue, et
l'unité de commande (9) est conçue pour régler la hauteur du cadre de soc (3) en fonction d'un signal (S₁) de l'unité de détermination de distance (8) lors du passage sur un sol (7),
le cadre de soc (3) étant en outre relié au cadre portant (2) par le biais d'un point d'articulation fixe, de telle sorte qu'un réglage en hauteur du cadre de soc (3) par rapport au cadre portant (2) entraîne un mouvement circulaire, dont le centre est le point d'articulation fixe et l'unité de commande (9) étant conçue pour varier la longueur de l'au moins un agencement de vérin (10) en fonction de la distance au sol détectée.

2. Système de soc selon la revendication 1, dans lequel l'unité de commande (9) est conçue pour régler la hauteur du cadre de soc (3) en fonction d'un signal (S1) de l'unité de détermination de distance (8) de telle manière que, lors du passage sur un sol (7), le support de soc de semoir (4) conserve une distance au sol constante à la hauteur du soc de semoir (5) et/ou que le cadre de soc (3) conserve une distance au sol constante lors du passage sur un sol (7), en particulier pour régler la distance du cadre de soc (3) au sol (7) à un niveau constant.

3. Système de soc selon l'une des revendications précédentes, dans lequel exactement deux agencements de vérin (10) sont prévus, qui effectuent le réglage en hauteur du cadre de soc (3) par rapport au cadre portant (2).

4. Système de soc selon l'une des revendications précédentes, dans lequel l'unité de détermination de distance (8) détermine la distance au sol (7) par ultrasons, par laser et/ou par un palpeur mécanique et est disposée sur le dispositif (1) de telle manière que, vue dans la direction de travail, elle est placée en amont du soc de semoir (5) et de préférence fixée au cadre de soc (3).

5. Système de soc selon l'une des revendications précédentes, dans lequel au moins deux rangées de socs de semoir (51, 52) disposées les unes derrière les autres dans la direction de travail sont prévues dans un agencement décalé, une roue plombeuse (6) associée étant placée en aval de chaque soc de semoir (51, 52), une première rangée de socs de semoir (51) s'appliquant avec ses supports de soc de semoir (4) respectifs sur un premier axe transversal (31) du cadre de soc (3), une seconde rangée de socs de semoir (52) s'appliquant avec ses supports de soc de semoir (4) respectifs sur un second axe transversal (32) du cadre de soc (3), le premier axe transversal (31) et le second axe transversal (32) étant espacés l'un de l'autre dans la direction de travail du dispositif (1), le premier axe transversal (31) et le second axe transversal (32) présentant, dans une position de travail du dispositif (1), approximativement le même niveau de hauteur, la différence de hauteur étant de préférence inférieure au double d'un ou au moins à un diamètre de section transversale du premier ou du second axe transversal (31, 32).

6. Système de soc selon l'une des revendications précédentes, dans lequel le dispositif (1) est un système de soc non guidé par un parallélogramme.

7. Système de soc selon l'une des revendications précédentes, dans lequel exactement une unité de détermination de distance (8) est prévue.

8. Système de soc selon l'une des revendications précédentes 1 à 6, dans lequel au moins deux unités de détermination de distance (8) sont prévues et l'unité de commande (9) est conçue pour établir une moyenne des signaux des au moins deux unités de détermination de distance (8) pour effectuer un réglage en hauteur du cadre de soc (3) sur la base de la valeur moyenne du signal.

9. Système de soc selon la revendication 1, dans lequel le cadre de soc (3) présente au moins un axe transversal (31, 32), qui s'étend parallèlement au sol et transversalement à la direction de travail et qui représente un point d'articulation pour le support de soc de semoir (4),
le support de soc de semoir (4) étant articulé sur l'axe transversal (31, 32) et, dans une position de travail du dispositif (1), guidé depuis le point d'articulation d'abord en s'éloignant du sol (7), de préférence vers l'arrière vu dans la direction de travail.

10. Système de soc selon la revendication 9, dans lequel le cadre de soc (3) présente, en plus de l'axe transversal (31), un autre axe transversal (32) arrière, qui sont disposés décalés l'un par rapport à l'autre dans la direction de travail et qui s'étendent respectivement parallèlement au sol et transversalement à la direction de travail et qui représentent respectivement un point d'articulation pour le support de soc de semoir (4), au moins un autre support de soc de semoir (4) étant articulé sur l'axe transversal (32) arrière et l'écartement entre rangées (A), c'est-à-dire la distance, dans la direction de travail, entre les socs de semoir (51, 52) disposés décalés les uns par rapport aux autres, étant supérieur ou égal à la distance (B) dans la direction de travail entre les deux axes transversaux (31, 32) disposés décalés l'un par rapport à l'autre.

11. Système de soc selon la revendication 5 ou l'une des revendications se référant à la revendication 5, dans lequel l'au moins un support de soc de semoir (4) partant de l'axe transversal (31, 32) avant est formé de telle manière qu'il s'étend, en partant d'un état articulé sur l'axe transversal (31) avant, vu dans la direction de travail, vers l'arrière au-dessus de l'axe transversal (32) arrière, franchit donc l'axe transversal (32) arrière au-dessus de son côté orienté dans la direction opposée au sol et est une structure tubulaire et/ou en forme de barre qui présente de préférence essentiellement uniquement un élément tubulaire ou en forme de barre qui est relié au soc de semoir (5).

12. Système de soc selon la revendication 5 ou l'une des revendications se référant à la revendication 5, dans lequel l'au moins un support de soc de semoir (4) présente, sur son extrémité éloignée du cadre de soc (3), une liaison articulée (41) avec une roue plombeuse (6), et est de préférence, sur son autre extrémité, couplé à l'axe transversal (31, 32) et/ou présente une partie d'articulation pour le couplage à l'axe transversal (31, 32), une partie arquée suivant la partie d'articulation ou dans le prolongement de celle-ci et une partie rectiligne suivant la partie arquée ou dans le prolongement de celle-ci, le soc de semoir (5) d'un support de soc de semoir (4) respectif étant fixé sur la partie rectiligne, et le support de soc de semoir (4) présentant de préférence, sur son extrémité éloignée du cadre de soc (3), une liaison articulée (41) avec une roue plombeuse (6).

13. Système de soc selon l'une des revendications précédentes, dans lequel l'au moins un support de soc de semoir (4) est attaché au cadre de soc (3) de manière non guidée par un parallélogramme.

14. Système de soc selon la revendication 5 ou l'une des revendications se référant à la revendication 5, dans lequel l'axe transversal (31, 32) s'étend en continu le long de toute la largeur de travail du dispositif (1), de préférence chaque axe transversal (31, 32) s'étend en continu le long de toute la largeur de travail du dispositif (1) pour le couplage d'un support de soc de semoir (4) du dispositif (1).

15. Système de soc selon l'une des revendications précédentes 9 à 14, dans lequel l'au moins un support de soc de semoir (4) partant de l'axe transversal (32) arrière et l'au moins un support de soc de semoir (4) partant de l'axe transversal (31) avant sont réalisés identiques dans leur construction de base, de préférence complètement identiques, l'au moins un support de soc de semoir (4) partant de l'axe transversal (32) arrière dépassant le support de soc de semoir (4) partant de l'axe transversal (31) avant dans son étendue longitudinale, de préférence par la formation d'une partie rectiligne plus longue.

16. Machine agricole dotée d'un système de soc qui est réalisé selon l'une des revendications précédentes.
